# EUROPEAN PATENT SPECIFICATION

(11) **EP 0 318 596 B1**
(45) Date of publication and mention of the grant of the patent: **01.12.1993**
(21) Application number: 88905240.3
(22) Date of filing: 14.06.1988
(51) Int. Cl.: F16K 31/56

(54) **SPOOL TYPE CHANGE-OVER VALVE DEVICE**
UMSTELLVENTIL-VORRICHTUNG VOM KOLBENSCHIEBERTYP
Dispositif de clapet de commutation du type à tiroir

(30) Priority: 15.06.1987 JP 148257/87
(43) Date of publication of application: 07.06.1989
(73) Proprietor: Yamada Yuki Seizo Co. Ltd., Ota-ku Tokyo 143 (JP)
(72) Inventor: MURATA, Minoru, Ota-ku Tokyo 143 (JP); YAMADA, Kazumasa, Urayasu-shi Chiba 272-01 (JP)
(74) Representative: BATCHELLOR, KIRK & CO.
(86) International application number: PCT/JP88/00573
(87) International publication number: WO 88/10389

(56) References cited:
- DE-A- 2 539 985
- DE-U- 7 528 983
- JP-U-52 038 723
- JP-Y-56 000 037
- US-A- 4 540 349

## Description

The present invention relates to a spool type switching valve device to be used for the switching operation in a diaphragm pump or similar apparatus.

An example of conventional switching devices for diaphragm pumps is described in Japanese Utility Model Publication No. 35748/1986 which provides a detent mechanism at the end of a spool used for switching the operation of a diaphragm pump to prevent the spool from stopping at the neutral point.

Such a conventional detent mechanism requires convexes around the shaft at the end of the spool and propelling balls by spring pressure to the surface of the shaft at the end of the spool by compressed coil springs. When the spool moves in the axial direction, spring pressure in the direction of the radius of each ball acts on the sloping surface of each of said convex, pushing the spool shaft towards one end or the other of the shaft with the neutral point at the centre whereby the spool does not stop at the neutral point.

As the detent mechanism of a conventional device thus comprises convexes and compresses coil springs, when the pressure of compressed coil springs is large, frictional resistance between convexes and balls increases, causing abrasion, resulting in problems such as less durability. When such abrasion initially occurs, there will be a further problem in that the spool, which is fitted inside the sleeve capable of rotation, is no longer able to rotate so that the abrasion continues at the convexes and only a limited portion of balls.

On the other hand, if spring pressure of the coil springs is weak, the force applied from the balls upon the convexes becomes insufficient and thus switching operation of the spool cannot be ensured.

DE-U-7528983 discloses a seat-type switching valve device, wherein a valve member located within a sleeve is axially movable; a detent mechanism is provided to prevent a possible standstill of the valve member at the neutral point. The upper end of the valve member is located around a shaft section and a spring holder attached to the sleeve with wire springs fitted between the valve member and spring member.

The objective of the present invention is to minimise or prevent abrasion of the detent mechanism and to provide reliable switching operation of the spool.

The present invention relates to a spool type switching valve device having spool 31 fitted inside sleeve 46 capable of movement in the axial direction; and detent mechanism 51 provided at one end of said spool 31 to prevent spool 31 from stopping at the neutral point; wherein said detent mechanism comprises spool operator 57 fitted around shaft 55 incorporated at the end of spool 31 as one body; spring holder 53 provided at the end of sleeve 46 as one body; and generally C-shaped wire springs 58 of circular cross section fitted between said spool operator and the spring holder 53. As spool 31 is moved and approaches the neutral point, wire springs 58 are rotated, with each side held by spring holder 53 as the respective centre, and compressed between the spring holder and spool operator 57; and when spool 31 has passed the neutral point, the repellent force conserved in wire springs 58 is immediately released so that spool 31 is instantaneously switched by a snap action of said wire springs 58.

The present invention has the benefit in that, as generally C-shaped wire springs of circular cross section are used for the detent mechanism to apply a snap action directly to the spool operator, unlike conventional detent mechanisms using balls, it may be substantially wear resistant from abrasion and thus has better durability. The present invention has the further benefit in that, because the wire springs themselves are rotated, the force in the axial direction is ensured and thus stitching of the spool is done smoothly.

Further, according to the present invention, the spool operator of the present spool type switching valve device is fitted around a shaft of the device with short clearances within which the spool operator can move in the direction of the shaft. As said clearances 63 and 64 are provided, the axial movement of spool operator 57 can be limited so that wire springs 58 need not be of considerable strength, whereby air pressure required for switching operation of spool 31 may be reduced.

In order that the invention may be illustrated and readily carried into effect, preferred embodiments thereof will now be described by way of example only, with reference to the accompanying drawings and in which:
Figure 1 is a schematic sectional view of a spool type switching valve device according to the present invention,
Figure 2 is a schematic plan of a detent mechanism from the device of Figure 1, and
Figure 3 is a schematic sectional view of the detent mechanism shown in Figure 2, illustrating its mode of action.

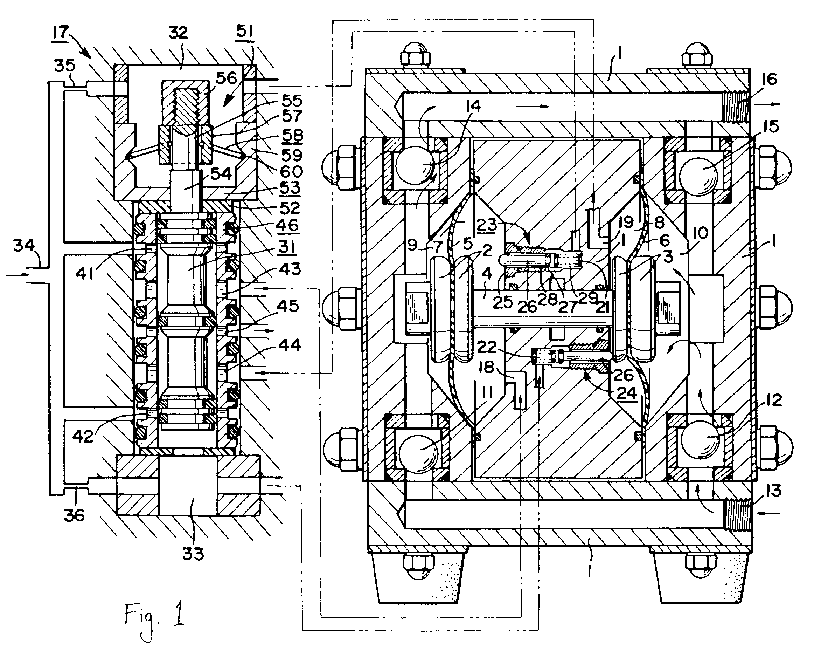

As shown in Fig. 1, rims of diaphragms 5 and 6, the centres of which are sandwiched and held by centre discs 2 and 3 respectively and are connected with each other by centre rod 4, are sandwiched and thus fixed at both sides of pump body 1; and working fluid chambers 7 and 8 inside are separated from pump chambers 9 and 10 by said diaphragms 5 and 6.

Each pump chamber 9 and 10 is connected with suction port 13 through check valves for suction 11 and 12 respectively and discharge port 16 through check valves for discharge 14 and 15 respectively. Working fluid vents 18 and 19 lead to said working fluid chambers 7 and 8 respectively in order to alternately supply and discharge working fluid into and from those chambers by means of switching valve 17. The air serves as the working fluid referred to herein. Said switching valve 17 is inset in the centre of pump body 1 in an actual device, but it is shown outside the device in the drawing in order to facilitate explanation.

Further, switching pressure reduction holes 21 and 22 lead to said working fluid chambers 7 and 8 respectively; and said switching pressure reduction holes 21 and 22 are provided with switching valves 23 and 24 which open and close them in conjunction with the movement of diaphragms 5 and 6 immediately before the termination of working fluid exhaust. Said switching valves 23 and 24 are arranged with valve bodies 25 screwed in said pressure reduction holes 21 and 22; push rods 26 inserted into said valve bodies 25 movable therein; O rings 27 fitted around small diameter sections at the rear part of said push rods 26 and facing valve seats 28; and compressed coil springs fitted between the rear ends of push rods 26 and pump body's surfaces 1 facing these rear ends in order to project the front ends of push rods 26 into working fluid chambers 7 and 8.

Said switching valve 17 is arranged by providing at both ends of spool 31 switching compression spaces 32 and 33 which lead to said switching pressure reduction holes 21 and 22 respectively; and connecting, through orifices 35 and 36 respectively, these switching compression spaces 32 and 33 to working fluid intake port 34 for supplying working fluid to stitching valve 17.

Said switching valve 17 is provided with ports 41 and 42, which directly lead to said working fluid intake port 34; ports 43 and 44 directly leading to said working fluid vents 18 and 19 of pump body 1; and port 45 to exhaust the air serving as the working fluid to the outside atmosphere. Further all of said ports are provided at sleeve 46, which is fitted around spool 31.

Action of the present embodiment shown in Fig. 1 is described hereunder;
The air is supplied from working fluid intake port 34 into stitching valve 17 at a specified pressure.

At that moment, spool 31 is at a position where port 41 is open and port 42 is closed, and thus the air passes through port 41 and enters port 43 and further into working fluid chamber 7 in pump body 1.

At the same time the air in working fluid chamber 8 at the other side is discharged from vent 19; passes through port 41; and then is exhausted from port 45 to the outside atmosphere.

Therefore, diaphragms 5 and 6 and centre rod 4 move to the left; diaphragm 5 pushes fluid material in pump chamber 9 at the left side to discharge port 16; and simultaneously, diaphragm 6 sucks fluid material from suction port 13 into pump chamber 10 at the right side.

Immediately before the termination of this leftward movement, the end of centre disc 3 moves push rod 26 of switch valve 24 so that the air in switching compression space 33 is exhausted to the atmosphere through said switch valve 24, working fluid chamber 8, vent 19 and port 44 and 45 in order.

As the amount of the air exhausted from switch valve 24 is larger than that supplied from orifice 36, the pressure upon stitching compression spaces 32 and 33 at both ends of spool 31, which was originally identical, becomes unequal, and the pressure applied to switching compression space 33 reduces.

As a result, spool 31 moves toward switching compression space 33, and thus port 41 is closed and port 42 opened so that diaphragms 5 and 6 and centre rod 4 move to the right.

Immediately before the termination of this rightward movement, switching of working fluid is effected automatically in the same manner as described above, and pumping action is thereby continuously repeated.

The structure and function of detent mechanism 51 provided at one end of said switching valve 17 is now described. This detent mechanism 51 seeks to prevent spool 31 from stopping at the neutral point.

As shown in Fig. 1, this detent mechanism 51 comprises spring holder 53 fixed at one end of sleeve 46, with packing 52 in between; shaft 54, which is incorporated with spool 31 as one body, projected into said switching compression space 32 through said packing 52 and the centre hole of spring holder 53; cap nut 56 screwed over shaft 55, which is a little smaller than shaft 54; and spool operator 57 fitted around said small diameter shaft 55 with a slight clearance provided in the direction of the shaft to be movable along the shaft 55. Wire springs 58 with a circular cross section are symmetrically fitted at the right and left side of said spool operator 57; and the other sides of wire springs 58 are fitted in single-V grooves 60 formed in ridges 59, which are provided at the right and left side of said spring holder 53 as one body.

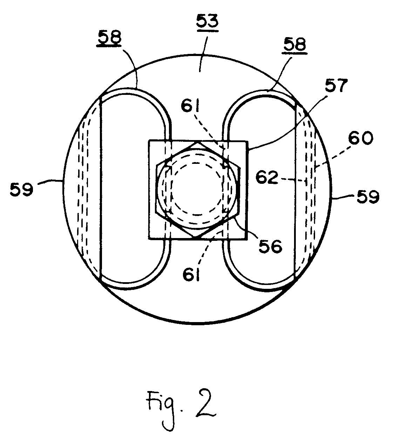

As shown in Fig. 2, each of said wire springs 58 is made into a C-shape, and both of its ends 61, facing each other with the gap in between, are fitted into small holes on the said spool operator 57 capable of rotation therein. Further, the straight portion 62 of each wire spring 58 is fitted in said single-V groove 60 also capable of rotation therein.

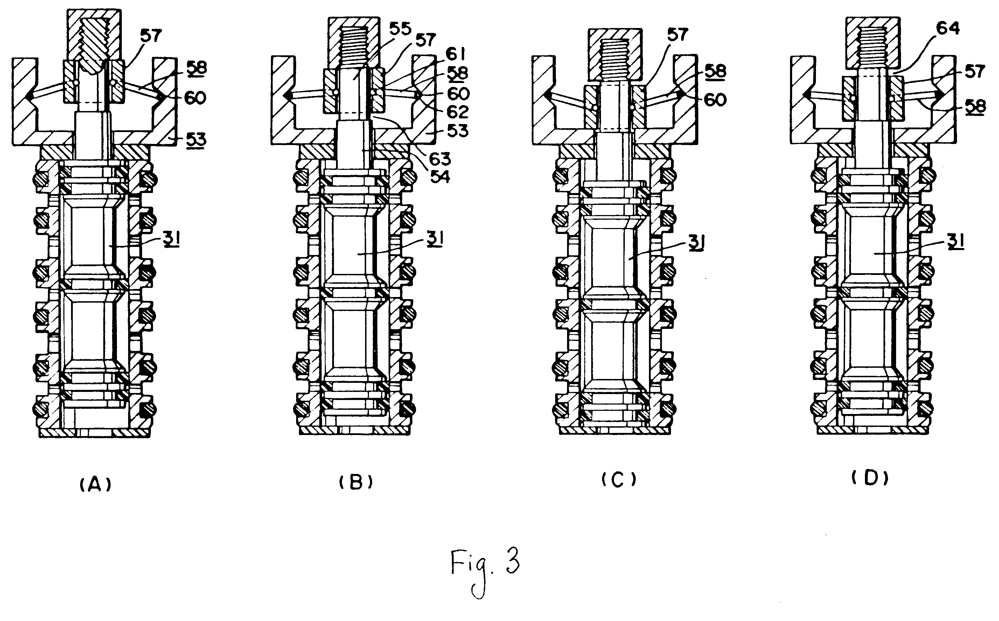

As shown in Fig. 3, when spool 31 is moved downward from the upper switched position shown in (A), wire springs 58 are rotated downward with single-V groove 60 on spring holder 53 as the fulcrum and compressed. As spool 31 approaches the neutral point, resisting wire springs 58, wire springs 58 are elastically deformed, as shown in (B), with their ends 61 approaching respective straight portions 62, thereby conserving a restoring force. When spool 31 has passed the neutral point, as shown in (C), wire springs 58 are immediately rotated downward with said single-V grooves 60 respectively as a fulcrum with a snap action caused by the repellent force conserved in the wire springs, so spool 31 is instantaneously switched to the lowest position. During said switching from (B) to (C), as there is a clearance 63 at the lower side of spool operator 57 fitted around shaft 55 before the switching, only spool operator 57 is reversed by light spring force to lower than the neutral point at first, and its inertia force works upon the end surface of shaft 54 together with the pushing pressure of wire springs 58 so that full and proper switching of spool 31 is ensured. (D) shows the condition where spool 31 is moving upward, during which there is a clearance 64 at the upper side of spool operator 57.

The present invention is effective as a spool type switching valve to be used for operating a switching mechanism for a diaphragm pump and other similar apparatus, wherein a detent mechanism is provided at an end of a spool used for the switching operation of a diaphragm pump to prevent the spool from stopping at the neutral point.

## Claims

1. A spool type switching valve device (17) having a spool (31) fitted inside a sleeve (46) to be movable in the axial direction; and a detent mechanism (51) provided at one end of said spool (31) such that possible standstill of said spool (31) at the neutral point can be prevented by said detent mechanism (51); wherein said detent mechanism comprises a spool operator (57) fitted around a shaft (55) integrally formed with said spool (31) and projecting from said one end thereof; the spool operator (57) being capable of axial movement with respect to the spool (31) a spring holder (53) provided at an end of said sleeve as one body; and generally C-shaped wire springs (58) of circular cross section fitted between said spool operator (57) and spring holder (53); the spool operator (57) being fitted around said shaft (55) with a slight clearance along the shaft so that the spool operator (57) has limited axial movement with respect to the shaft (55).

2. A switching valve device as claimed in claim 1 in which said shaft (55) is integrally formed with and projects from an end of a larger diameter shaft (54) which extends from said one end of the spool (31).

3. A switching valve device as claimed in either preceding claim, wherein the axial movement of the spool operator (57) with respect to the shaft (55) is limited by a captive nut (56).

4. A switching valve device as claimed in claim 3 wherein the spool operator (57), in use, is caused to abut an end of said captive nut (56) and an end of said larger diameter shaft (54).

5. A diaphragm pump incorporating a switching valve device as claimed in any preceding claim.

## Patentansprüche

1. Eine Umstellventil-Vorrichtung vom Kolbenschiebertyp mit einem in Achsrichtung drehbaren Kolben 31 in einer Muffe 46; eine an einem Ende des Kolbens 31 angebrachte Feststellvorrichtung, die das Anhalten des Kolbens 31 am Nullpunkt verhindert; diese Feststellvorrichtung umfaßt das um den Schaft 55 am Ende des Kolbens 31 herum angebrachte und über dieses Ende hinausragende Kolbensteuerteil 57; hierbei ist das Kolbensteuerteil 57 in Achsrichtung und bezüglich des Kolbens 31 beweglich, und an einem Ende der Muffe ist ein Federapparat angebracht 53; zwischen das Kolbensteuerteil und den Federapparat 53 sind C-förmige Drahtfedern 58 mit rundem Querschnitt eingepaßt; das um den Schaft 55 herum angebrachte Kolbensteuerteil 57 weist einen gewissen Abstand in Schaftrichtung auf, damit die Beweglichkeit entlang des Schaftes 55 gewährleistet ist.

2. Eine Umstellventil-Vorrichtung entsprechend Absatz 1, bei dem der genannte Schrift 55 einen integralen Bestandteil des über das eine Ende des Kolbens hinausragenden Schaftes mit größerem Durchmesser 54 bildet und über diesen hinausragt.

3. Eine Umstellventil-Vorrichtung entsprechend den vorhergehenden beiden Absätzen, bei der die Bewegung des Kolbensteuerteils 57 in Achsrichtung und bezüglich des Schaftes 55 durch eine unverlierbare Schraubenmutter eingeschränkt wird.

4. Eine Umstellventil-Vorrichtung entsprechend Absatz 3, bei dem das in Verwendung befindliche Kolbensteuerteil 57 an ein Ende der unverlierbaren Schraubenmutter 56 und an ein Ende des Schaftes mit dem größeren Durchmesser 54 stößt.

5. Eine Membranpumpe mit einer Umstellventil-Vorrichtung entsprechend den in sämtlichen vorangegangenen Absätzen formulierten Ansprüchen.

## Revendications

1. Dispositif (17) de clapet de commutation du type à tiroir comprenant un tiroir (31) installé à l'intérieur d'un manchon (46) pour être mobile dans la direction axiale ; et un mécanisme de cliquet (51) monté à une extrémité dudit tiroir (31) de façon qu'un arrêt possible dudit tiroir (31) au point mort puisse être empêché par ledit mécanisme de cliquet (51) ; dans lequel ledit mécanisme de cliquet comprend un actionneur de tiroir (57) monté autour d'un arbre (55) faisant partie intégrante dudit tiroir (31) et faisant saillie de ce tiroir à une de ses extrémités ; l'actionneur de tiroir (57) étant susceptible de subir un mouvement axial par rapport audit tiroir (31), un support de ressort (53) monté à une extrémité dudit manchon et en en faisant partie intégrante; et des ressorts en fil d'acier (58) ayant la forme générale d'un C ainsi qu'une section transversale circulaire montés entre ledit actionneur de tiroir (57) et le support de ressort (53) ; l'actionneur de tiroir (57) étant monté autour dudit arbre (55) avec un léger écart le long dudit arbre, de manière que l'actionneur de tiroir (57) puisse subir un mouvement axial limité par rapport à l'arbre (55).

2. Dispositif de clapet de commutation selon la revendication 1, dans lequel ledit arbre (55) fait partie intégrante d'une extrémité d'un arbre de plus gros diamètre (54) et en fait saillie, lequel s'étend à partir de ladite première extrémité du tiroir (31).

3. Dispositif de clapet de commutation selon l'une quelconque des revendications précédentes, dans lequel le mouvement axial dudit actionneur de tiroir (57) par rapport à l'arbre (55) est limité par un écrou prisonnier (56).

4. Dispositif de clapet de commutation selon la revendication 3, dans lequel l'actionneur de tiroir (57), en service, est sollicité pour venir buter sur une extrémité dudit écrou prisonnier (56) et sur une extrémité dudit arbre (54) de plus gros diamètre.

5. Pompe à diaphragme incorporant un dispositif de clapet de commutation selon l'une quelconque des revendications précédentes.
